# EUROPEAN PATENT APPLICATION

(11) **EP 1 130 069 A2**
(43) Date of publication of application: **05.09.2001**
(21) Application number: 01104320.5
(22) Date of filing: 22.02.2001
(51) Int. Cl.: C09J 7/02

(54) **Sheet for protecting paint film, process for producing the same, and method of applying the same**

(30) Priority: 29.02.2000 JP 2000052802
(71) Applicant: NITTO DENKO CORPORATION, Osaka (JP); KANSAI PAINT CO. LTD., Amagasaki-shi Hyogo-ken (JP)
(72) Inventor: Shibata, Kenichi, Ibaraki-shi, Osaka (JP); Ooyama, Kooki, Ibaraki-shi, Osaka (JP); Sano, Kenji, Ibaraki-shi, Osaka (JP); Natsume, Masayoshi, Ibaraki-shi, Osaka (JP); Kobayashi, Yoshiki, Ibaraki-shi, Osaka (JP); Hayashi, Keiji, Ibaraki-shi, Osaka (JP); Matsui, Komaharu, Hiratsuka-shi, Kanagawa (JP); Akaki, Yu, Hiratsuka-shi, Kanagawa (JP); Eda, Takeshi, Amagasaki-shi, Hyogo (JP); Ueda, Hiroshi, Amagasaki-shi, Hyogo (JP)
(74) Representative: Grünecker, Kinkeldey, Stockmair & Schwanhäusser Anwaltssozietät

(57) **Abstract**

A sheet for protecting a paint film, the sheet comprising a substrate and formed on one side thereof a rubber-based pressure-sensitive adhesive layer which has, on a side opposite the substrate side, a modified surface layer having a thickness of 100 nm or smaller and having a higher functional group concentration than the inner parts of the adhesive layer; and a process for producing the sheet which comprises subjecting a rubber-based pressure-sensitive adhesive layer formed on a substrate to a treatment for generating functional groups on the surface of the adhesive layer. The sheet, even when applied to a poorly bondable paint film apt to cause adhesion failures due to bleeding, etc., can be satisfactorily adhered thereto efficiently without necessitating paint film cleaning, can retain the satisfactorily adherent state over long without separating from the paint film, can be easily peeled from the paint film after accomplishment of the protection, and is less apt to leave migrants which may foul the paint film. The sheet is effective in avoiding the bleeding of additives including an attractant. The sheet can be efficiently applied for covering because air bubbles are less apt to be trapped between the sheet and the paint film due to fine roughness formed on the surface of the pressure-sensitive adhesive layer.

## Description

### FIELD OF THE INVENTION

The present invention relates to a sheet for protecting a paint film which is capable of being efficiently applied and satisfactorily adhered even to poorly bondable paint films, can be easily peeled from the paint film after long-term adhesion, is less apt to foul the paint film, and is suitable for the surface protection of automotive bodies and parts, coated steel sheets, etc.

### DESCRIPTION OF THE RELATED ART

A paint film formed by applying a wax type coating material in a thickness of from 5 to 40 µm has conventionally been known as a means for preventing the paint films of coated automobiles, coated automotive parts, and the like from being damaged or impaired in gloss, color, etc. by suspended or colliding matters such as dust particles, rain, and stone debris when such coated products are loaded on trucks or ships and transported to remote areas such as overseas countries. However, this means has had the following and other problems. It is difficult to form a wax paint film having an even thickness, so that even protection is difficult to obtain. Wax paint films are apt to soil and have poor resistance to acid rain. Components of the wax infiltrate into the paint film of the coated product to cause discoloration, etc. In addition, the formation and removal of wax paint films necessitate much labor and are apt to arouse environmental problems concerning use of a solvent, waste liquid treatment, etc.

On the other hand, various surface-protective sheets are known which comprise a substrate and a pressure-sensitive adhesive layer formed thereon. Proposed for use in the protection of paint films is a protective sheet comprising a film or the like and, formed thereon, a radiation-curable pressure-sensitive adhesive layer having a lowered glass transition point or a rubber-based pressure-sensitive adhesive layer comprising polyisobutylene or the like (see JP-A-2-199184 (the term "JP-A" as used herein means an "unexamined published Japanese patent application") and JP-A-6-73352). This technique of paint film protection with a sheet is capable of eliminating the problems described above. However, the conventional protective sheet has had the following problems. The protective sheet, when applied to paint films of some kinds, is less apt to show its adhesive strength from the beginning or undergoes a decrease in adhesive strength with the lapse of time to arouse troubles concerning adhesion failures including sheet separation from the adhered, making it substantially impossible to use the sheet for paint film protection. Furthermore, when the protective sheet is applied, air bubbles are apt to be trapped and the sheet is apt to crease. The application of the sheet hence requires much time.

As a result of intensive investigations to overcome the problems described above, it has been found that those adhesion failures are attributable to the fact that low molecular ingredients remaining unreacted in the paint film and the leveling agent which was incorporated in the coating composition bleed out from the paint film. Namely, the bleeding results in the formation of a layer having low cohesive force on the surface of the paint film and this layer inhibits the protective sheet from showing its adhesive strength. A leveling agent is essential, for example, for preventing cissing and thereby avoiding unevenness of coating. Although initial adhesive strength may be obtained by removing the adhesion-inhibitive substances by cleaning the paint film surface prior to application of the protective sheet, this operation is ineffective in overcoming the problem of adhesive strength decrease caused by bleeding with time. In addition, the cleaning of the paint film necessitates much labor and, hence, considerably reduces the advantages of the protection with a sheet over the protection with a wax.

For eliminating such drawbacks, a sheet for protecting a paint film has been proposed which has a rubber-based pressure-sensitive adhesive layer comprising a rubbery polymer which contains a highly polar attractant such as a hindered phenol or amine and is in such a singular compatibilized state that the attractant is present in a higher concentration in a surface layer (see JP-A-9-3420). This protective sheet is intended to function by the following mechanism. The attractant adsorbs the ingredients which have bled out from the paint film and diffuses the adsorbed ingredients into inner parts of the pressure-sensitive adhesive layer. Thus, the ingredients which have bled out are prevented from forming a layer having low cohesive force on the paint film surface to thereby enable the protective sheet to show necessary adhesive strength and retain the adherent state. However, this protective sheet has a drawback that when it is applied to paint films of some kinds, the attractant migrates to the highly polar paint film side and remains on the paint film surface after the protective sheet is peeled off. The residual attractant arouses the problem of fouling.

On the other hand, since the problems of air bubble trapping, creasing, and the like are influenced by the surface smoothness of the pressure-sensitive adhesive layer, a sheet for protecting a paint film has been proposed which employs an embossed substrate and has a pressure-sensitive adhesive layer having a roughened surface due to the embossing (see JP-A-9-235525) . However, this protective sheet has a drawback that the surface roughness attributable to the embossing is transferred to the paint film and removal of the sheet is apt to result in an adhesive residue transferred to areas corresponding to the edges of projections in the embossed pattern.

### SUMMARY OF THE INVENTION

One object of the invention is to provide a sheet for protecting a paint film which, even when applied to a poorly bondable paint film apt to cause adhesion failures due to bleeding, etc., is capable of being satisfactorily adhered thereto efficiently without necessitating paint film cleaning, can retain the satisfactorily adherent state over long without separating from the paint film, can be easily peeled from the paint film after accomplishment of the protection, and is less apt to leave migrants which may foul the paint film.

Another object of the invention is to provide a process for producing the sheet.

Still another object of the invention is to provide a method of applying the sheet.

The invention provides a sheet for protecting a paint film, the sheet comprising a substrate and formed on one side thereof a rubber-based pressure-sensitive adhesive layer which has, on a side opposite the substrate side, a modified surface layer having a thickness of 100 nm or smaller and having a higher functional group concentration than the inner parts of the adhesive layer.

The invention further provides a process for producing the sheet which comprises subjecting a rubber-based pressure-sensitive adhesive layer formed on one side of a substrate to a treatment for generating functional groups on the surface of the pressure-sensitive adhesive layer.

According to the invention, a sheet for protecting a paint film can be obtained which, even when applied to a poorly bondable paint film apt to cause adhesion failures due to bleeding, etc., has satisfactory adhesive strength, can retain the adherent state over long without separating from the paint film, and can be easily peeled from the paint film after accomplishment of the protection. Furthermore, since such properties of the pressure-sensitive adhesive layer have been imparted by surface modification, not only the protective sheet is less apt to undergo migration or leave adhesive layer components on the paint film surface, but also the bleeding of additives including an attractant can be avoided. Consequently, the protective sheet is less apt to foul the paint film upon removal thereof from the paint film and can be subjected to practical use without necessitating paint film cleaning. Furthermore, since the pressure-sensitive adhesive layer usually has fine surface roughness of 1 µm or finer formed by a surface modification treatment, application of the protective sheet is less apt to result in air bubble trapping or creasing. Namely, the protective sheet can be applied efficiently. Even if the surface roughness is transferred to the paint film, the pattern transferred is too fine to be visually recognized.

The surface modification of a pressure-sensitive adhesive layer can be conducted by a known method in which adhesive strength is lowered or improved by performing a plasma treatment or corona discharge treatment at a low temperature (see JP-B-57-15627 (the term "JP-B" as used herein means an "examined Japanese patent publication") and JP-A-7-173441). However, the surface modification treatment according to the invention produces effects different from those obtained by the conventional treatments. Specifically, the protective sheet of the invention has such properties that when applied to general paint films suffering no adhesion failures caused by bleeding, the pressure-sensitive adhesive layer has substantially the same adhesive strength regardless of whether or not it has a modified surface layer, and that the protective sheet shows significantly improved adhesive strength when applied to poorly bondable paint films. From this point, the modified surface layer according to the invention, which has a higher functional group concentration than the inner parts of the pressure-sensitive adhesive layer, is thought to serve the following peculiar function. The modified surface layer, based on the polarity of its functional groups, adsorbs the ingredients which have bled out from the paint film and diffuses the adsorbed ingredients into inner parts of the pressure-sensitive adhesive layer, whereby the ingredients which have bled out are prevented from forming a layer having low cohesive force on the paint film surface. Thus, the modified surface layer, in application to a poorly bondable paint film, constitutes and maintains the adherent state with satisfactory adhesive strength, while it produces substantially no influences in application to general paint films in which bleeding does not occur.

In the case where a conventional protective sheet is applied to automotive members made of a non-polar material such as polypropylene, there has been a problem that a non-polar substance, e.g., a softener, migrates from the pressure-sensitive adhesive layer to the automotive members to deform the same. Besides producing the effects on paint films described above, the modified surface layer according to the invention inhibits the migration of such non-polar substances and is effective in mitigating the problem of deformation of automotive members. Although details of this function are unclear, it is thought that the interposition of a polar layer formed by surface modification (modified surface layer) between a relatively compatible non-polar automotive member and a non-polar substance present in inner parts of the pressure-sensitive adhesive layer is effective in inhibiting the readily migrating non-polar substance, e.g., a softener, from migrating.

### DETAILED DESCRIPTION OF THE INVENTION

The sheet for protecting a paint film according to the invention comprises a substrate and formed on one side thereof a rubber-based pressure-sensitive adhesive layer which has a modified surface layer having a thickness of 100 nm or smaller and having a higher functional group concentration than the inner parts of the adhesive layer. This sheet for protecting a paint film can be produced, for example, by subjecting a rubber-based pressure-sensitive adhesive layer formed on a substrate to a treatment for generating functional groups on the surface of the pressure-sensitive adhesive layer. Examples of the treatment include corona discharge treatment, flame treatment, plasma treatment, sputtering/etching treatment, irradiation with ultraviolet or electron beams, and exposure to ozone.

A combination of two or more of such techniques may be used as the treatment for generating functional groups. Corona discharge treatment is a preferred treatment technique from the standpoints of apparatus availability, ease of treatment operation, etc. For conducting the treatment, known methods can be used, such as, e.g. , the method described in *Kôgyô Zairyô*, Vol.29, No.3, 104(1981). For the corona discharge treatment, an appropriate commercial corona discharge device (manufactured by Tomoe Engineering Co., Ltd.) can be used.

Functional groups can be incorporated by treating the pressure-sensitive adhesive layer from its surface side if desired in a stream of a carrier gas to thereby cause a component of the pressure-sensitive adhesive layer, e.g., the base polymer, to undergo a reaction such as decomposition, recombination, or oxidation. The functional groups to be incorporated may be of one or more appropriate kinds selected, for example, from hydroxyl, carbonyl, carboxyl, amide, and amino groups. The corona discharge treatment is advantageous for incorporating oxygen-containing functional groups such as hydroxyl, carbonyl, or carboxyl groups.

The modified surface layer is formed in a thickness of 100 nm or smaller. Thickness thereof exceeding 100 nm is undesirable in that the pressure-sensitive adhesive layer as a whole may have considerably altered properties, that when the protective sheet is peeled from the paint film, the modified surface layer is apt to separate from the inner parts of the pressure-sensitive adhesive layer at the interface therebetween and remain on the paint film, resulting in visually recognizable fouling by the residual adhesive, and that the pressure-sensitive adhesive layer may deteriorate and have impaired long-term stability. From the standpoints of maintaining the desired bulk properties of the rubber-based pressure-sensitive adhesive layer, preferential modification of a surface layer only, etc., the thickness of the modified surface layer is preferably from 0.1 to 50 nm, more preferably from 0.5 to 40 nm, most preferably from 1 to 30 nm. Since a pressure-sensitive adhesive layer having a thickness corresponding to such a thickness of the modified surface layer is difficult to form by coating, it is difficult to form a rubber-based pressure-sensitive adhesive layer according to the invention by a method in which pressure-sensitive adhesive layers differing in the concentration of functional groups are superposed.

The difference in functional group concentration between the modified surface layer and an inner layer can be easily judged by examining the surface of the rubber-based pressure-sensitive adhesive layer before and after an edging treatment (in the presence and absence of the modified surface layer) by, for example, X-ray electron spectroscopy for chemical analysis (ESCA), time-of-flight secondary-ion mass spectroscopy (TOF-SIMS), or FT-IR or by the angular resolution method. In the invention, when the surface of the rubber-based pressure-sensitive adhesive layer having the modified surface layer (before treatment) and that of the pressure-sensitive adhesive layer in which the modified surface layer has been treated by edging with argon ions (after treatment) are examined by ESCA, then the ratio of the proportion of surface oxygen element O₁ₛ after the treatment to that of surface oxygen element O₁ₛ before the treatment is preferably 0.5 or lower, more preferably 0.4 or lower, most preferably 0.2 or lower, from the standpoint of enabling the pressure-sensitive adhesive layer to satisfactorily adhere to poorly bondable paint films and from other standpoints. Furthermore, when the surface of the pressure-sensitive adhesive layer having the modified surface layer (before treatment) and that of the pressure-sensitive adhesive layer in which the modified surface layer has been treated by gallium ion sputtering (after treatment) are analyzed by TOF-SIMS, then the ratio of the [C₂H₃O+]/[C₃H₇+] peak height ratio after the treatment to that peak height ratio before the treatment is preferably 0.8 or lower, more preferably 0.6 or lower, most preferably 0.4 or lower. The edging treatment is conducted under the conditions of an ionic voltage of 3 kV, an ionic current of 25 mA, and an edging time of 10 seconds, while the sputtering treatment is conducted under the conditions of an ionic voltage of 15 kV, an ionic current of 9 µA, and a sputtering time of 10 seconds. The thickness in which a surface layer is removed by the edging or sputtering treatment under such conditions is presumed to be about from 0.1 to 10 nm, although it varies depending on the material, etc.

One or more appropriate rubbery polymers can be used as a base polymer for forming the rubber-based pressure-sensitive adhesive layer whose surface is to be modified. Examples thereof include diene polymers such as polyisoprene and polybutadiene and hydrogenated polymers obtained therefrom; olefin polymers such as ethylene/propylene rubbers, ethylene/α-olefin copolymers, ethylene/propylene/α-olefin copolymers, and propylene/α-olefin copolymers; butyl rubber and polyisobutylene; styrene/diene hydrocarbon random copolymers such as styrene/butadiene rubbers and hydrogenated copolymers obtained therefrom; A/B/A type styrene block polymers such as styrene/butadiene/styrene (SBS), styrene/isoprene/styrene (SIS), styrene/ethylene-butylene copolymer/styrene (SEBS), and styrene/ethylene-propylene copolymer/styrene (SEPS) and hydrogenated polymers obtained therefrom; A/B type styrene block polymers such as styrene/butadiene (SB), styrene/isoprene (SI), styrene/ethylene-butylene copolymer (SEB), and styrene/ethylene-propylene copolymer (SEP) and hydrogenated polymers obtained therefrom; A/B/C type crystalline styrene/olefin block polymers such as styrene/ethylenebutylene copolymer/olefin crystal (SEBC) and hydrogenated polymers obtained therefrom; and C/B/C type crystalline olefin block polymers such as olefin crystal/ethylene-butylene copolymer/olefin crystal (CEBC) and hydrogenated polymers obtained therefrom.

Base polymers preferred from the standpoints of long-term stability of pressure-sensitive adhesive properties, etc. include polymers having no unsaturated bonds, such as polyisobutylene and olefin polymers; hydrogenated polymers obtained by hydrogenating diene polymers, styrene random copolymers, and styrene block polymers; and hydrogenated polymers obtained by hydrogenating crystalline styrene/olefin block copolymers and crystalline olefin block polymers.

Appropriate additives can be incorporated in forming the pressure-sensitive adhesive layer for the purpose of regulating pressure-sensitive adhesive properties, etc. Examples of such additives include softeners, olefin polymers, silicone polymers, acrylic polymers, tackifiers, antioxidants, light stabilizers such as hindered amines, ultraviolet absorbers, fillers such as calcium oxide, magnesium oxide, silica, zinc oxide, and titanium oxide, and pigments.

The incorporation of a softener is usually effective in improving adhesive strength. Examples of the softener include low-molecular polymers such as polyisobutylene, polybutene, polyisoprene, and polybutadiene, hydrogenated polyisoprene, hydrogenated polybutadiene, derivatives thereof obtained by incorporating a reactive group, e.g., hydroxyl or carboxyl, into one or each molecular end, olefin polymers such as ethylene/α-olefin copolymers, ethylene/propylene/α-olefin copolymers, propylene/α-olefin copolymers, and ethylene/propylene rubbers, process oils, naphthenic oils, castor oil, linseed oil, soybean oil, phthalic ester plasticizers, phosphoric ester plasticizers, and liquid aliphatic petroleum resins. One or more appropriate softeners can be used.

From the standpoints of preventing migration to paint films, moderately enhancing the strength of adhesion to paint films, etc., it is preferred to use a softener having a number-average molecular weight of from 1,000 to 300,000, preferably from 2,000 to 150,000, more preferably from 3,000 to 100,000. Although the amount of the softener to be incorporated can be suitably determined according to the desired adhesive strength, etc., it is generally 100 parts by weight or smaller, preferably 60 parts by weight or smaller, more preferably 40 parts by weight or smaller, per 100 parts by weight of the base polymer.

On the other hand, an olefin polymer may be incorporated for the purpose of controlling the enhancement of strength of adhesion to paint films or for another purpose. As this olefin polymer can be used an appropriate olefin polymer having a higher molecular weight than the polyolefin softeners shown above. Examples thereof include low-density, linear low-density, medium-density, or high-density polyethylene, polypropylene, ethylene/α-olefin copolymers, ethylene/propylene/α-olefin copolymers, propylene/α-olefin copolymers, ethylene/ethyl (meth)acrylate copolymers, ethylene/methyl (meth)acrylate copolymers, and ethylene/propylene rubbers.

Such olefin polymers for use in controlling the enhancement of adhesive strength can be used alone or in combination of two or more thereof. Although the amount of such olefin polymers to be incorporated can be suitably determined according to the desired adhesive strength, etc., it is generally 50 parts by weight or smaller, preferably 30 parts by weight or smaller, more preferably 20 parts by weight or smaller, per 100 parts by weight of the base polymer.

The incorporation of a silicone polymer is usually effective in improving peelability. One or more appropriate silicone polymers having a backbone made up of siloxane bonds and having any of a wide range of molecular weights can be used. Examples thereof include dimethylpolysiloxane, methylphenylpolysiloxane, methylhydrogenpolysiloxane, and such polysiloxanes modified with epoxy, alkyl, amino, carboxyl, alcohol, fluorine, alkyl-aralkyl polyether, epoxy polyether, polyether, or the like. From the standpoints of attaining a satisfactory adherent state, stably maintaining peelability, etc., the amount of the silicone polymer to be incorporated is generally 5 parts by weight or smaller, preferably 3 parts by weight or smaller, more preferably from 0.005 to 2 parts by weight, per 100 parts by weight of the base polymer.

On the other hand, an acrylic polymer may be incorporated for the purposes of improving wetting ability to thereby enhance adhesion to poorly bondable paint films and inhibiting the adhesive strength from increasing with time in a high-temperature atmosphere. It is preferred from these standpoints to use an acrylic polymer having a weight average molecular weight of from 1,000 to 500,000. An acrylic polymer having a molecular weight in that range, which is liquid at ordinary temperature, is thought to function in the following manner. The acrylic polymer is present in a higher concentration in a surface layer of the pressure-sensitive adhesive layer because of its compatibility with the base polymer to thereby satisfactorily wet paint films. Thus, the acrylic polymer enables the pressure-sensitive adhesive layer to satisfactorily adhere to poorly bondable paint films. Furthermore, the acrylic polymer is stable to heat and enables the protective sheet to be satisfactorily peeled off.

If the acrylic polymer has a weight average molecular weight lower than 1,000, there are cases where the effect of improving adhesive strength may be insufficient due to the too low molecular weight. If the molecular weight thereof exceeds 500,000, there are cases where the pressure-sensitive adhesive layer has poor long-term stability or shows poor peelability after long-term adhesion. From the standpoints of improved adhesive strength, long-term stability, stable peelability, etc., it is preferred to use as acrylic polymer having a weight average molecular weight of from 3,000 to 300,000, preferably from 5,000 to 100,000, more preferably from 10,000 to 50,000. From the standpoints of the ability to wet paint films, etc., it is preferred to use an acrylic polymer having a glass transition temperature of 25°C or lower, preferably 0°C or lower, more preferably -10°C or lower.

Acrylic polymers can be used alone or in combination of two or more thereof. The acrylic polymers are not particularly limited in the monomers therefor, etc. Examples thereof include a polymer produced by polymerizing one or more (meth)acrylates having an alkyl group having 1 to 18 carbon atoms if desired with one or more copolymerizable monomers known for acrylic pressure-sensitive adhesives, such as (meth)acrylamide, by an appropriate method, e.g., solution polymerization. Examples of such acrylic polymers include commercial products available under the trade names of Polyflow No. 55 and Polyflow No. 50E (manufactured by Kyoeisha Chemical Co., Ltd.), Disparon LC-951, Disparon LC-955, and Disparon LC-1985 (manufactured by Kusumoto Chemicals Ltd.), and Modaflow (manufactured by Monsanto Co.).

The amount of the acrylic polymer to be incorporated is preferably from 0.05 to 40 parts by weight per 100 parts by weight of the base polymer. If the amount thereof is smaller than 0.05 parts by weight, there are cases where the effect of improving adhesive strength is insufficient due to the too small incorporation amount. If the amount thereof exceeds 40 parts by weight, there are cases where the acrylic polymer is present in a higher concentration in a surface layer of the pressure-sensitive adhesive layer to considerably reduce the adhesive strength and this is apt to arouse troubles. For example, when this protective sheet is applied to, e.g., the paint film of a motor vehicle and the vehicle is driven, then the protective sheet peels off by itself. From the standpoints of attaining a satisfactory adherent state, etc., the amount of the acrylic polymer to be incorporated is preferably 30 parts by weight or smaller, more preferably 20 parts by weight or smaller, most preferably from 0.1 to 10 parts by weight, per 100 parts by weight of the base polymer.

The incorporation of a tackifier is usually effective in improving adhesive strength. One or more appropriate tackifiers known for use in pressure-sensitive adhesives may be used. Examples thereof include petroleum resins such as aliphatic polymers, aromatic polymers, aliphatic-aromatic copolymers, and alicyclic polymers, coumarone-indene resins, terpene resins, terpene-phenol resins, (alkyl)phenolic resins, rosin resins, polymerized rosin resins, xylene resins, and resins obtained by hydrogenating these resins. Preferred of these resins from the standpoints of compatibility with the base polymer, avoidance of paint film fouling, etc. are those which are not highly polar. The amount of the tackifier to be incorporated is preferably 80 parts by weight or smaller, more preferably 40 parts by weight or smaller, most preferably 20 parts by weight or smaller, per 100 parts by weight of the base polymer from the standpoint of avoiding the problem of adhesive transfer and improving adhesive strength by inhibiting the cohesive force from decreasing.

As the substrate on which a pressure-sensitive adhesive layer is to be formed, a suitable substance can be used according to, e.g., the intended use of the sheet for protecting a paint film. Examples of the substrate include a film, a porous sheet, and a composite porous sheet such as a laminate of the porous sheet. Preferred examples of the film include films made of one or more members selected from olefin polymers such as propylene homopolymers, block, random, and graft copolymers of propylene, low-density, high-density, and linear low-density ethylene polymers, and ethylene/propylene copolymers, polyesters, and polyamides. Appropriate additives may be incorporated into such films for the purposes of deterioration prevention, etc. Examples of the additives include antioxidants, ultraviolet absorbers, light stabilizers such as hindered amines, antistatic agents, and inorganic fillers. The thickness of the substrate consisting of a film is generally from 5 to 300 µm, preferably from 20 to 100 µm. However, the thickness thereof should not be construed as being limited to that range.

On the other hand, as the porous sheet can be used an appropriate one such as, e.g., a porous film or fibrous sheet without particular limitations. Examples of the porous film include ones obtained by treating the aforementioned films to make them porous. Examples of the fibrous sheet include ones produced by gathering fibers into a sheet form, such as nonwoven fabrics, woven fabrics, and paper. The fibrous sheets have an advantage that the protective sheet employing such a fibrous substrate can have improved peelability because the pressure-sensitive adhesive layer formed on the fibrous substrate can have a surface reflecting the surface roughness of the fibers constituting the substrate. Another advantage of the fibrous sheets is that because of their air permeability and moisture permeability, the protective sheet employing such a fibrous substrate has the property of allowing infiltrated rain water to readily volatilize. Namely, the paint film from which the protective sheet has been peeled is less apt to bear traces of the protective sheet.

The fibers constituting the fibrous sheet may be suitable ones, and are preferably ones excellent in water resistance, etc. Examples thereof include fibers made of one or more thermoplastic polymers, such as fibers made of any one of the aforementioned olefin polymers, a mixture of two or more thereof, a polyester, or a polyamide, regenerated or semisynthetic cellulosic fibers such as rayon, cuprammonium rayon, and cellulose acetate, natural fibers such as cotton, silk, and wool, and mixtures of these fibers (blended-yarn fabrics) . Appropriate additives such as those shown above with regard to the film may be incorporated into the fibrous sheet also for the purposes of deterioration prevention, etc.

The film or porous sheet described above may be one produced by an appropriate technique, examples of which include film-forming techniques such as T-die extrusion and inflation and techniques for forming a nonwoven fabric or fibrous sheet, such as melt blowing, spun-bonding, dry processes, wet processes, and flash spinning. Although the thickness of the porous sheet is not particularly limited, the basis weight thereof is preferably from 5 to 200 g/m², more preferably from 10 to 150 g/m², most preferably from 20 to 100 g/m², from the standpoints of strength, paint film protective performance, etc.

The composite porous sheet can be formed, for example, by laminating a polymer layer to one or each side of the porous sheet. This laminate has excellent crease-free applicability due to its stretchability, conformability to curved surfaces, etc., and is excellent in the ability to prevent rain water infiltration, etc. The laminated layer may be a coating layer of an appropriate polymer, a bonded film layer, or the like. The polymer is preferably a thermoplastic polymer such as any of the aforementioned olefin polymers, polyamides, and polyesters. Of these, olefin polymers are especially preferred from the standpoints of suitability for incineration after stripping, etc. The thickness of the laminated layer is preferably from 5 to 50 µm, more preferably from 7 to 40 µm, most preferably from 10 to 30 µm, from the standpoints of protection of paint films against colliding substances, peelability after accomplishment of protection, strength, conformability to curved surfaces, etc.

For laminating a polymer to a porous sheet, an appropriate technique can be used. Examples thereof include thermal laminating of a film, bonding of a film with an adhesive or the like, extrusion laminating of a polymer film onto a porous sheet, and coating with a polymer solution.

The substrate may be one having an ultraviolet-shielding effect. Use of an ultraviolet-shielding substrate is desirable in that it prevents the deterioration of itself and of the pressure-sensitive adhesive layer outdoors and thereby enables the protective sheet to stably retain satisfactory peelability free from substrate breakage and adhesive transfer over long. An especially preferred ultraviolet-shielding substrate is one in which the transmittance of ultraviolet having wavelengths of from 190 to 370 nm is 5% or lower, preferably 3% or lower, more preferably 1% or lower, most preferably 0.5% or lower.

An ultraviolet-shielding substrate can be formed by an appropriate technique, e.g., by a method in which ultraviolet-shielding particles are dispersedly incorporated in part or all of the components of the film, porous sheet, or composite porous sheet described above. Specific examples thereof include a method in which a polymer containing ultraviolet-shielding particles is formed into a film or fibers by an appropriate technique to form a film or laminated layer and a method in which these fibers are used to form a fibrous sheet.

More specifically, use may be made of a method in which ultraviolet-shielding particles are mixed with a thermoplastic polymer and this mixture is formed into a film or laminated layer by an appropriate film-forming technique such as T-die extrusion or inflation. Alternatively, use may be made of a method in which that mixture is formed into fibers and the fibers are deposited in a layered arrangement or interlaced by an appropriate technique for forming a fibrous sheet, such as melt blowing or spun-bonding. Thus, a film, fibrous sheet, or laminated layer each containing ultraviolet-shielding particles dispersed in inner parts thereof is formed.

Other techniques usable for obtaining an ultraviolet-shielding substrate include: a method in which a coating fluid containing ultraviolet-shielding particles is deposited on a surface of a substrate-forming film, fibers, or laminated layer to form a paint film; a method in which the coating fluid is applied to the surface of fibers to form a paint film thereon and the coated fibers are used to form a fibrous sheet; and a combination of these methods. The coating fluid can, for example, be a dispersion obtained by mixing a binder ingredient comprising an appropriate resin such as an acrylic, urethane, or polyester resin with ultraviolet-shielding particles in a medium comprising an appropriate organic solvent, e.g., toluene, water, or the like.

The coating fluid can be applied by an appropriate technique such as, e.g., immersion in the fluid, spraying of the fluid, or coating with a gravure coater, reverse-roll coater, or the like. Although the thickness of the paint film to be formed can be suitably determined, it is generally preferably 40 µm or smaller, more preferably 20 µm or smaller, most preferably from 0.5 to 10 µm, from the standpoints of the efficiency of treatment, thickness reduction, etc. As the ultraviolet-shielding particles can be used appropriate particles which reflect or absorb ultraviolet. Examples thereof include titanium white, red iron oxide, zinc white, alumina, tin oxide, and carbon black. Especially preferred of these are titanium white and zinc white from the standpoints of ultraviolet-shielding effect, etc. The ultraviolet-shielding particles may have an appropriate diameter. However, from the standpoint of enabling the particles to retain a dispersedly contained state stably or over long, the average particle diameter of the ultraviolet-shielding particles is generally preferably from 0.005 to 5 µm, more preferably from 0.01 to 1 µm, most preferably from 0.02 to 0.5 µm. Ultraviolet-shielding particles can be incorporated also into the pressure-sensitive adhesive layer.

Furthermore, ultraviolet-shielding properties can be imparted to a substrate also by a method comprising forming a film of an appropriate metal, e.g., stainless steel, by vapor deposition. In this case, the thickness of the vapor-deposited film is preferably 10,000 Å or smaller, more preferably from 10 to 5,000 Å, most preferably from 100 to 1,000 Å, from the standpoint of maintaining the satisfactory applicability of the substrate.

For forming the sheet for protecting a paint film, a known technique for forming an adhesive sheet can be used. Examples thereof include: a method in which either a solution of a material for forming a pressure-sensitive adhesive layer in a solvent or a melt of the material is applied to a substrate; a method in which a pressure-sensitive adhesive layer is formed on a separator by that method and is then transferred to a substrate; a method in which a material for forming a pressure-sensitive adhesive layer is applied to a substrate by extrusion coating; a method in which a material for forming a substrate and a material for forming a pressure-sensitive adhesive layer are coextruded in two or more layers; a method in which a pressure-sensitive adhesive layer alone is laminated to a substrate; a method in which a pressure-sensitive adhesive layer and another layer are laminated to a substrate; and a method in which a pressure-sensitive adhesive layer and one or more substrate-forming materials such as a film and laminated layer are formed by laminating.

Although the pressure-sensitive adhesive layer may have been formed over the whole one-side surface of the substrate by any of the methods described above or another method, it may be one formed so as to be air-permeable. Examples of such a pressure-sensitive adhesive layer include a layer formed by a method in which a material for forming a pressure-sensitive adhesive layer is formed into fibers by an appropriate technique such as, e.g., melt blowing or curtain spraying and the fibers are deposited in a layered arrangement, especially in the form of nonwoven fabric or the like, and further include a patterned pressure-sensitive adhesive layer formed by partly coating a substrate with a pressure-sensitive adhesive in the form of dots, stripe, etc. Although the thickness of the pressure-sensitive adhesive layer to be formed may be suitably determined according to the desired adhesive strength, etc., it is generally from 3 to 100 µm, preferably from 7 to 70 µm, more preferably from 10 to 50 µm. If desired, the pressure-sensitive adhesive layer may be protected by provisionally covering it with a separator or the like until use.

That side of the substrate on which a pressure-sensitive adhesive layer is to be formed may be subjected according to need to a surface treatment for improving adhesion of the pressure-sensitive adhesive layer, etc. Examples of the treatment include corona treatment, flame treatment, plasma treatment, sputtering/etching treatment, and coating with a primer or the like. On the other hand, a coating layer comprising an appropriate release agent such as, e.g., a silicone, long-chain-alkyl resin, or fluororesin may be formed on that side of the substrate on which a pressure-sensitive adhesive layer is not formed, for the purpose of, e.g., obtaining a roll which can be easily unwound.

The sheet for protecting a paint film according to the invention can be advantageously applied to coated adherends such as automotive bodies, automotive parts including bumpers, metal sheets including steel sheets, and formed metal sheets for the purpose of surface protection against colliding minute substances, chemicals, etc. or for other purposes. Such coated adherends are, for example, products or parts coated with a paint film based on a polyester-melamine, alkyd-melamine, acrylic-melamine, or acrylic-urethane resin, an acrylic-polyacidic hardener system, etc., in particular, coated with a poorly bondable paint film which contains bleeding ingredients such as, e.g., unreacted low molecular ingredients and a leveling agent and is apt to cause adhesion failures.

The coating-protective sheet to be applied to a paint film may be one which has been treated beforehand so that the rubber-based pressure-sensitive adhesive layer has a modified surface layer. Alternatively, the rubber-based pressure-sensitive adhesive layer of an untreated adhesive sheet may be treated to form a modified surface layer before the resultant coating-protective sheet is applied to a paint film. The latter method of application has an advantage that the modified surface layer is less altered by the air, etc. to bring about excellent stability of an adherent state.

The invention will be explained below in more detail by reference to the following examples, but the invention should not be construed as being limited thereto.

### EXAMPLE 1

A kneaded mixture consisting of 100 parts (parts by weight; the same applies thereinafter) of polypropylene (Noblen, manufactured by Sumitomo Chemical Co., Ltd.), 9 parts of titanium oxide (Tipaque, manufactured by Ishihara Sangyo Kaisha, Ltd.), 0.8 parts of an ultraviolet absorber (Tinuvin 326, manufactured by Ciba Specialty Chemicals), and 0.2 parts of a hindered-amine light stabilizer (Chimassorb 944, manufactured Ciba Specialty Chemicals) was extrusion-molded with a T-die to obtain a film having a thickness of 40 µm. A rubber-based pressure-sensitive adhesive layer having a thickness of 20 µm was formed on one side of the film and then subjected to a corona discharge treatment to obtain a sheet for protecting a paint film.

The rubber-based pressure-sensitive adhesive layer was formed by dissolving 100 parts of polyisobutylene having a weight-average molecular weight of 870,000 and 20 parts of polyisobutylene having a weight average molecular weight of 30,000 in toluene, applying the solution to the film, and heating the coated film at 80°C for 2 minutes. The corona discharge treatment was conducted using a corona discharge device (manufactured by Tomoe Engineering Co., Ltd.) under the conditions of a line speed of 7 m/min, corona discharge distance of 2.65 mm, and corona discharge amount of 300 W (the same applies hereinafter).

### EXAMPLE 2

A material for pressure-sensitive-adhesive layer formation consisting of a kneaded mixture of 100 parts of SEPS (Septon 2063, manufactured by Kuraray Co., Ltd.) and 40 parts of hydrogenated liquid polyisoprene (LIR-290, manufactured by Kuraray Co., Ltd.) was extruded simultaneously with the same substrate-forming material as in Example 1 to form a two-layer sheet composed of a film having a thickness of 40 µm and a rubber-based pressure-sensitive adhesive layer having a thickness of 20 µm formed on one side thereof. Thereafter, the pressure-sensitive adhesive layer was subjected to a corona discharge treatment to obtain a sheet for protecting a paint film.

### EXAMPLE 3

A sheet for protecting a paint film was obtained in the same manner as in Example 1, except that a rubber-based pressure-sensitive adhesive layer consisting of 100 parts of SEBS (Kraton G1657, manufactured by Shell Kagaku K.K.) , 20 parts of a hydrogenated petroleum resin (Arkon P-100, manufactured by Arakawa Chemical Industries, Ltd.), and 10 parts of polybutene (HV-50, manufactured by Nippon Petrochemicals Co., Ltd.) was formed. The film thickness and the thickness of the pressure-sensitive adhesive layer were regulated to 45 µm and 15 µm, respectively.

### EXAMPLE 4

A sheet for protecting a paint film was obtained in the same manner as in Example 1, except that 0.4 parts of a terpene-phenol resin (YS Polystar, manufactured by Yasuhara Chemical Co., Ltd.) was additionally incorporated into the rubber-based pressure-sensitive adhesive layer.

### COMPARATIVE EXAMPLE 1

A sheet for protecting a paint film was obtained in the same manner as in Example 1, except that the corona discharge treatment was omitted.

### COMPARATIVE EXAMPLE 2

A sheet for protecting a paint film was obtained in the same manner as in Example 2, except that the corona discharge treatment was omitted.

### COMPARATIVE EXAMPLE 3

A sheet for protecting a paint film was obtained in the same manner as in Example 3, except that the corona discharge treatment was omitted.

### COMPARATIVE EXAMPLE 4

A sheet for protecting a paint film was obtained in the same manner as in Example 4, except that the corona discharge treatment was omitted.

### COMPARATIVE EXAMPLE 5

A sheet for protecting a paint film was obtained in the same manner as in Example 1, except that 1 part of a hydrogenated rosin resin (Foral, manufactured by Rika-Hercules Inc.) was additionally incorporated into the rubber-based pressure-sensitive adhesive layer and that the corona discharge treatment was omitted.

### COMPARATIVE EXAMPLE 6

A sheet for protecting a paint film was obtained in the same manner as in Example 1, except that 5 parts of a terpene-phenol resin (YS Polystar) was additionally incorporated into the rubber-based pressure-sensitive adhesive layer and that the corona discharge treatment was omitted.

### EVALUATION TEST

The coating-protective sheets obtained in the Examples and Comparative Examples were applied at 23°C to an acrylic-melamine paint film (AC/MF) which was a general paint film having an n-hexadecane contact angle (as measured at 10 seconds after dropping; the same applies hereinafter) of 8 degrees or to a polyester-melamine paint film (PE/MF) which was a poorly bondable paint film having an n-hexadecane contact angle of 20 degrees. After the lapse of 30 minutes, each protective sheet was examined for adhesive strength (180° peeling; peel rate, 300 mm/min). The protective sheets were further examined for migration to an acrylic-urethane paint film (paint film) and to a polyester (PE) plate, and for fouling (SWOM^{*}300H) of the AC/MF paint film, which was a paint film susceptible to fouling.

The results obtained are shown in the following Table. In the Table are also shown: the ratio of the proportion of surface element O₁ₛ in the surface of the rubber-based pressure-sensitive adhesive layer treated by edging with argon ions to the proportion thereof in the untreated surface of the adhesive layer, as determined by ESCA [(O₁ₛ after treatment) / (O₁ₛ before treatment)]; and the ratio of the [C₂H₃O+]/[C₃H₇+] peak height ratio for the adhesive layer surface treated by gallium ion sputtering to that peak height ratio for the untreated adhesive layer surface, as determined by TOF-SIMS [([C₂H₃O+]/[C₃H₇+] peak height ratio after treatment)/([C₂H₃O+]/[C₃H₇+] peak height ratio before treatment)].

**TABLE**

| | | Example | | | | Comparative Example | | | | | |
|---|---|---|---|---|---|---|---|---|---|---|---|
| | | 1 | 2 | 3 | 4 | 1 | 2 | 3 | 4 | 5 | 6 |
| Ratio between surface element proportions | | 0 | 0 | 0,3 | 0.2 | -* | -* | 0.9 | 0.6 | 0.9 | 1.0 |
| Ratio between peak height ratios | | 0 | 0 | 0.3 | 0.1 | -* | -* | 0.9 | 0.9 | 0.8 | 0.9 |
| Adhesive strength (N/25 mm) | AC/MF | 7.8 | 8.4 | 11.8 | 8.2 | 7.7 | 8.8 | 12.1 | 8.1 | 8.1 | 10.1 |
| | PE/MF | 4.7 | 5.8 | 4.8 | 4.7 | 0.2 | 0.5 | 3.1 | 1.2 | 2.2 | 5.2 |
| Migration | Paint film | None | None | None | None | None | None | None | None | Occurred | None |
| | PE plate | None | None | None | None | None | None | Occurred | None | None | None |
| Fouling (SWOM*300H) | | None | None | None | None | None | None | None | None | None | Occurred |

| | | | | | | | | | | | |
|---|---|---|---|---|---|---|---|---|---|---|---|
| *Neither O₁ₛ nor [C₂H₃O+] was detected because of the absence of oxygen atom. | | | | | | | | | | | |

The Table shows that the protective sheets of the Examples, which had a modified surface layer, had substantially the same strength of adhesion to the general paint film as the protective sheets not having a modified surface layer, and showed a greatly improved strength of adhesion to the poorly bondable paint film because of the modified surface layer. The table further shows that the protective sheets of the Examples were excellent in the properties of not causing migration and not fouling the paint films.

## Claims

1. A sheet for protecting a paint film, said sheet comprising a substrate and formed on one side thereof a rubber-based pressure-sensitive adhesive layer which has, on a side opposite the substrate side, a modified surface layer having a thickness of 100 nm or smaller and having a higher functional group concentration than the inner parts of the adhesive layer.

2. The sheet for protecting a paint film of claim 1, wherein when the surface of the rubber-based pressure-sensitive adhesive layer is treated by edging with argon ions, the ratio of the proportion of surface element O₁ₛ in the treated surface layer to the proportion thereof in the untreated surface layer is 0.5 or lower.

3. The sheet for protecting a paint film of claim 1, wherein when the surface of the rubber-based pressure-sensitive adhesive layer is treated by gallium ion sputtering and then analyzed by TOF-SIMS, the ratio of the [C₂H₃O+]/[C₃H₇+] peak height ratio for the treated surface layer to that peak height ratio for the untreated surface layer is 0.8 or lower.

4. The sheet for protecting a paint film of claim 1, wherein the rubber-based pressure-sensitive adhesive layer comprises as a base polymer at least one member selected from the group consisting of diene polymers, olefin polymers, butyl rubber, polyisobutylene, random copolymers of styrene and one or more diene hydrocarbons, styrene block polymers of the A/B/A type or A/B type, crystalline styrene/olefin block polymers of the A/B/C type, crystalline olefin block polymers of the C/B/C type, and polymers obtained by hydrogenating these polymers.

5. The sheet for protecting a paint film of claim 1, wherein the rubber-based pressure-sensitive adhesive layer contains a softener comprising at least one member selected from the group consisting of isobutylene polymers, butene polymers, diene polymers, olefin polymers, and polymers obtained by hydrogenating these polymers, the amount of the softener being 100 parts by weight or smaller per 100 parts by weight of the base polymer.

6. The sheet for protecting a paint film of claim 1, wherein the rubber-based pressure-sensitive adhesive layer contains a silicone polymer in an amount of 5 parts by weight or smaller per 100 parts by weight of the base polymer.

7. The sheet for protecting a paint film of claim 1, wherein the rubber-based pressure-sensitive adhesive layer contains an acrylic polymer in an amount of 40 parts by weight or smaller per 100 parts by weight of the base polymer.

8. The sheet for protecting a paint film of claim 1, wherein the substrate comprises a film, a porous sheet, or a composite porous sheet.

9. The sheet for protecting a paint film of claim 1, wherein the transmittance of ultraviolet having wavelengths of from 190 to 370 nm is 5% or lower.

10. A process for producing a sheet for protecting a paint film which comprises subjecting a rubber-based pressure-sensitive adhesive layer formed on one side of a substrate to a treatment for generating functional groups on the surface of the pressure-sensitive adhesive layer to thereby form a rubber-based pressure-sensitive adhesive layer which has a modified surface layer having a thickness of 100 nm or smaller and having a higher functional group concentration than the inner parts of the adhesive layer.

11. A method of applying a sheet for protecting a paint film which comprises: subjecting an adhesive sheet comprising a substrate and a rubber-based pressure-sensitive adhesive layer formed on one side thereof to a treatment for generating functional groups on the surface of the rubber-based pressure-sensitive adhesive layer to thereby form a modified surface layer having a thickness of 100 nm or smaller and having a higher functional group concentration than the inner parts of the adhesive layer; and then adhering the adhesive sheet to the paint film of a coated adherend.
